# EUROPEAN PATENT APPLICATION

(11) **EP 1 741 621 A1**
(43) Date of publication of application: **10.01.2007**
(21) Application number: 06013955.7
(22) Date of filing: 05.07.2006
(51) Int. Cl.: B62D 61/02, B62M 23/02

(54) **Electric bicycle**

(30) Priority: 05.07.2005 JP 2005195797
(71) Applicant: YAMAHA HATSUDOKI KABUSHIKI KAISHA, Iwata-shi, Shizuoka 438-8501 (JP)
(72) Inventor: Terada, Junji, Iwata-shi Shizuoka-ken 438-8501 (JP); Ono, Tomohiro, Iwata-shi Shizuoka-ken 438-8501 (JP); Fujishiro, Masaya, Iwata-shi Shizuoka-ken 438-8501 (JP); Nishiyama, Motokuni, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to an electric bicycle comprising a pedal section (17) for inputting driving force, an electric motor (35) for generating driving force, a controller (30) for controlling rotational torque of the electric motor, and an indicator (32), wherein the indicator is attached to the controller and is placed in an interior of a front cover unit (13).

## Description

The present invention relates to an electric bicycle having a pedal section for inputting driving force and an electric motor for generating driving force.

Conventionally, an electric bicycle having a pedal section for inputting driving force by a rider and an electric motor for generating driving force is used (for example, see JP-A-2000-261911). An operation box of the electric bicycle having an operation switch and an electrically operative indicator is disposed adjacent to a coupling portion which couples a head tube and a down tube with each other so that the rider can easily operate the switch or can easily watch the indicator. A controller adjusts the electric power supplied to the electric motor from a battery and controls a rotational speed of the electric motor. The controller is disposed adjacent to a pedal crankshaft. A wire harness, which is formed with a bunch of wires, connects the controller and the operation box to each other.

Such an operation box and a controller of the electric bicycle need a container that protects them from water or dust. However, in the electric bicycle discussed above, the operation box and the controller are spaced apart from each other and thus individually require one container. Accordingly, a parts count increases and production costs rise. The wire harness connecting the operation box and the controller to each other inevitably becomes longer and its installation can be troublesome. In addition, structural parts or members are necessary for individually fixing the operation box and the controller to the body of the bicycle. The parts or members also increase the production costs.

The present invention is made for coping with the problems discussed above. An object thereof, thus, is to provide an electric bicycle whose controller has an indicator so that a parts count is reduced and a structure of the bicycle is simpler to reduce production costs.

This objective is solved in an inventive manner by an electric bicycle comprising a pedal section for inputting driving force, an electric motor for generating driving force, a controller for controlling rotational torque of the electric motor, and an indicator, wherein the indicator is attached to the controller and is placed in an interior of a front cover unit.

Preferably, a body of the electric bicycle has a steering shaft pivotable about an axis thereof, said steering shaft having a handle unit atop thereof, and wherein the front cover unit is arranged adjacent to the steering shaft, and wherein the controller with the attached indicator is attached to the front cover unit.

Further, preferably the front cover unit is formed with a front surface cover member and a rear surface cover member, and wherein the front and rear surface cover members are coupled with each other and together define an internal space therebetween, and wherein a window is formed at a portion of the front cover unit so that the space opens outward, and the controller is positioned within the space while the indicator is exposed through the window.

Still further, preferably the controller is fastened to the rear surface cover member by a fastener disposed within the internal space. Therein, the front surface cover member may be detachably attached to the rear surface cover member.

Yet further, preferably the rear surface cover member has a recessed portion having a surface that faces upward, and the window is formed on the surface of the recessed portion facing upward.

Preferably, the recessed portion is positioned on a right or left side of the rear surface cover member relative to the steering shaft, and wherein another recessed portion having another surface that faces upward is positioned on the remainder side of the rear surface cover member, and wherein another window is formed on the surface of the another recessed portion facing upward, and wherein a power switch for starting or stopping the electric motor is exposed through the another window.

Further, preferably the handle unit has an accelerator and accelerator operational amount detecting means for detecting an operational amount of the accelerator, and wherein the accelerator operational amount detecting means and the controller are connected to each other by a lead wire through which a detection signal detected by the accelerator operational amount detecting means is transmitted to the controller.

Still further, preferably the handle unit has a brake operator and brake operation detecting means for detecting an operation of the brake operator, and wherein the brake operation detecting means and the controller are connected to each other by a lead wire through which a detection signal detected by the brake operation detecting means is transmitted to the controller.

In the following, the present invention is explained in greater detail with respect to several embodiments thereof in conjunction with the accompanying drawings, wherein:
- FIG. 1: is a side elevational view of an electric bicycle configured in accordance with one embodiment,
- FIG. 2: is a front elevational view of an upper portion of the electric bicycle shown in FIG. 1,
- FIG. 3: is a rear elevational view of the electric bicycle, showing a front cover unit viewed from a rear location,
- FIG. 4: is a side elevational view of the electric bicycle, showing the interior of the front cover unit viewed from a lateral location,
- FIG. 5: is a front elevational view of the electric bicycle, showing the front cover unit without a front surface cover member thereof viewed from a front location,
- FIG. 6: is a cross sectional view of the front cover unit, showing a controller attached to a rear surface cover member of the front cover unit,
- FIG. 7: is a cross sectional view of the front cover unit, showing a power switch attached to the rear surface cover member,
- FIG. 8: is a front elevational view of the controller having an indicator, and
- FIG. 9: is a top plan view of the controller shown in FIG. 8.

### Description of Reference Numerals:

10: electric bicycle
10a: vehicle body
13: front cover unit
13a: rear surface cover member
13b: front surface cover member
14: handlebar
17: pedal section
22: steering shaft
23b: grip
23c: potentiometer
24a: 24b: brake lever
25a: 25b: brake switch
27: internal space
28a, 28b: recessed portion
29a, 29b: window
30: controller
30a: controller body
31: power switch
32: indicator
33: battery
34a: lead wire
35: electric motor
36: boss
37: screw

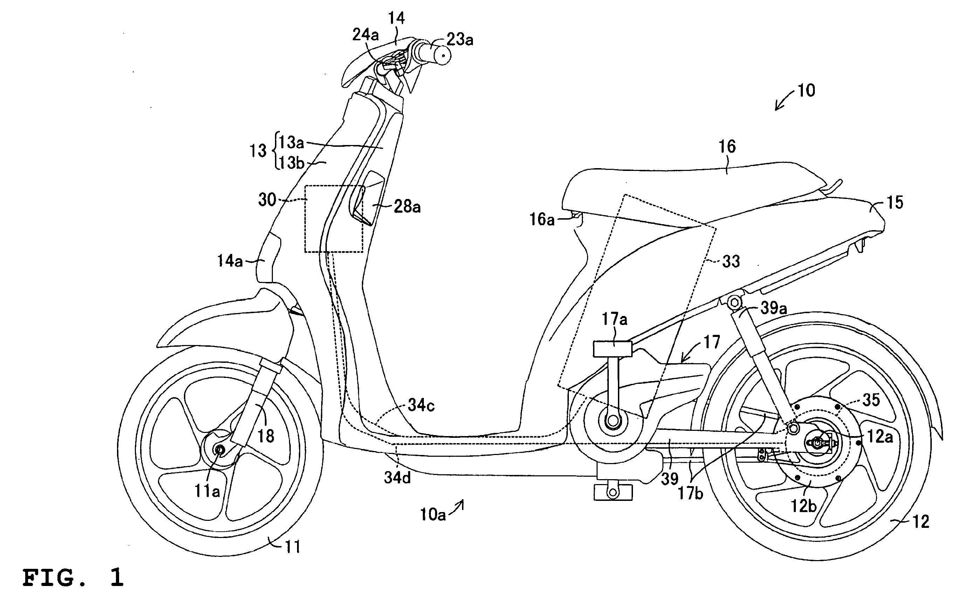

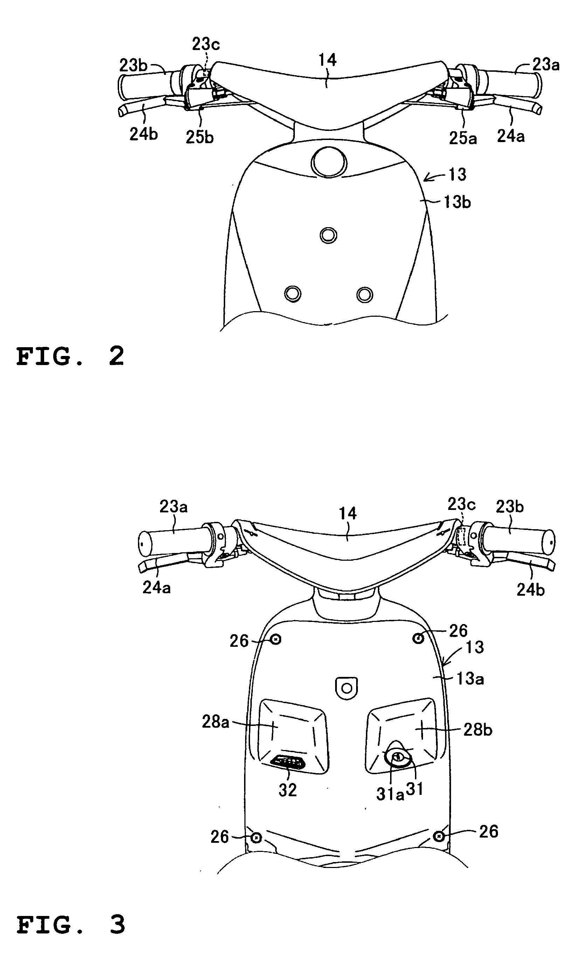

One embodiment will be described below using drawings. FIG. 1 shows an electric bicycle 10 configured in accordance with the embodiment. The electric bicycle 10 includes a pair of wheels which are front wheel 11 and a rear wheel 12, and a vehicle body 10a to which the pair of wheels are attached. Also with reference to FIGs. 2 and 3, handlebars 14 extend above a top of a front cover unit 13 which forms a front side portion of the body 10a. A light 14a is disposed in a center area of a front surface of the front cover unit 13. A seat 16 is positioned in a top area of a rear cover unit 15 which forms a rear side portion of the body 10a. A pedal section 17 with which the rider inputs the driving force is attached to the vehicle body 10a at a location below a front side of the rear cover unit 15.

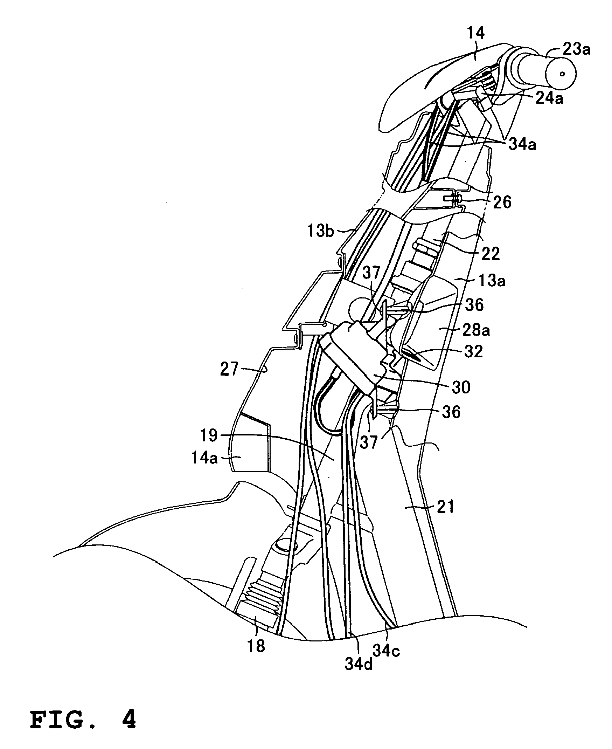

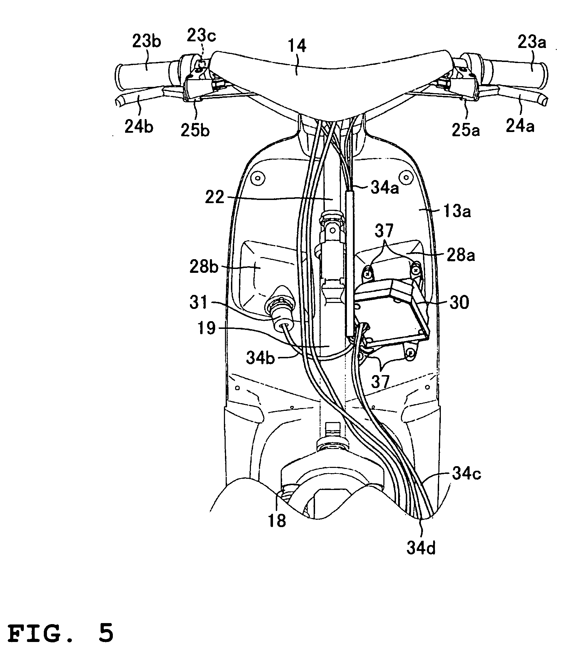

Lower end portions of a front fork 18 bifurcated downward journal the front wheel 11 for rotation. That is, respective lower ends of the front fork 18 support respective lateral ends of the axle 11 a of the front wheel 11 for rotation. Thereby, the front wheel 11 can rotate about an axis of the axle 11 a. As shown in FIGs. 4 and 5, a top end portion of the front fork 18 has a head pipe 19. The head pipe 19 is coupled with a front end portion (top end portion) of a down tube 21 which forms a portion of the major part of the vehicle body 10a.

A steering shaft 22 extends through the head pipe 19 for pivotal movement about its axis. A lower end portion of the steering shaft 22 is coupled with a center of the top end portion of the front fork 18. A top end portion of the steering shaft 22 protrudes upward from a top end portion of the head pipe 19. The handlebars 14 are coupled with the top end portion of the head pipe 19. Thus, when the rider operates the handlebars 14 to pivot the steering shaft 22 about the axis thereof, the front wheel 11 turns rightward or leftward in response to a pivotal amount of the steering shaft 22. Right and left ends of the handlebars 14 individually have grips 23a, 23b. The grips 23a, 23b are fixed to the respective handlebars 14 so that the rider can hold them with his or her hands. The grip 23b is pivotable about its axis so as to function as an accelerator of the present embodiment in addition to that it functions simply as a grip.

Brake levers 24a, 24b are disposed adjacent to the respective grips 23a, 23b and are urged to leave from the associated grips 23a, 23b. When the brake levers 24a, 24b are pulled up to the respective grips 23a, 23b, the rotation of the front wheel 11 and the rear wheel 12 is stopped. A potentiometer 23c functioning as an accelerator operational amount detecting means of the present embodiment is disposed in the handlebars 14 and adjacent to the grip 23b to detect a rotational operation amount of the grip 23b. Brake switches 25a, 25b functioning as brake operation detecting means of the present embodiment are connected to the respective brake levers 24a, 24b to detect that respective brake levers 24a, 24b are operated.

The front cover unit 13 is formed with a rear surface cover member 13a defining a rear surface and a front surface cover member 13b defining a front surface, both of which are coupled with each other by screws 26. An internal space 27 is defined between the rear and front surface cover members 13a, 13b. The head pipe 19, a portion of the down tube 21, the steering shaft 22, the controller 30, the power switch 31, etc. are disposed in the space 27. As shown in FIGS. 3 and 5, rectangular recessed portions 28a, 28b are formed on both the right and left sides of the rear surface cover member 13a that interposes the head pipe 19 and the steering shaft 22. FIG. 5 shows an interior side of the rear surface cover member 13a viewed from a front location by removing the front surface cover member 13b. In this state, the recessed portions 28a, 28b project forward.

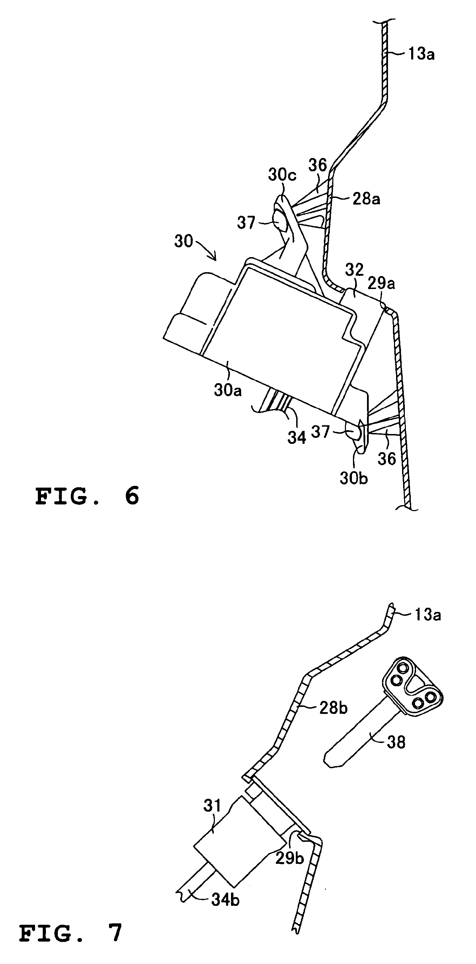

Each recessed portion 28a, 28b has a vertical front surface and four slant surfaces slantingly extending from four edge lines of the front surface to the fundamental surface of the rear surface cover member 13a. As shown in FIG. 6, a window 29a is formed in one of the slant surfaces facing upward and positioned at the bottom of the recessed portion 28a. Also, as shown in FIG. 7, another window 29b is formed in another slant surface facing upward and positioned at the bottom of the recessed portion 28b. The controller 30 having the indicator 32 is fastened to an internal surface of the rear surface cover member 13a at a position adjacent to the window 29a so that the indicator 32 is exposed outside through the window 29a. The power switch 31 is fastened to the internal surface to be exposed outside through the window 29b.

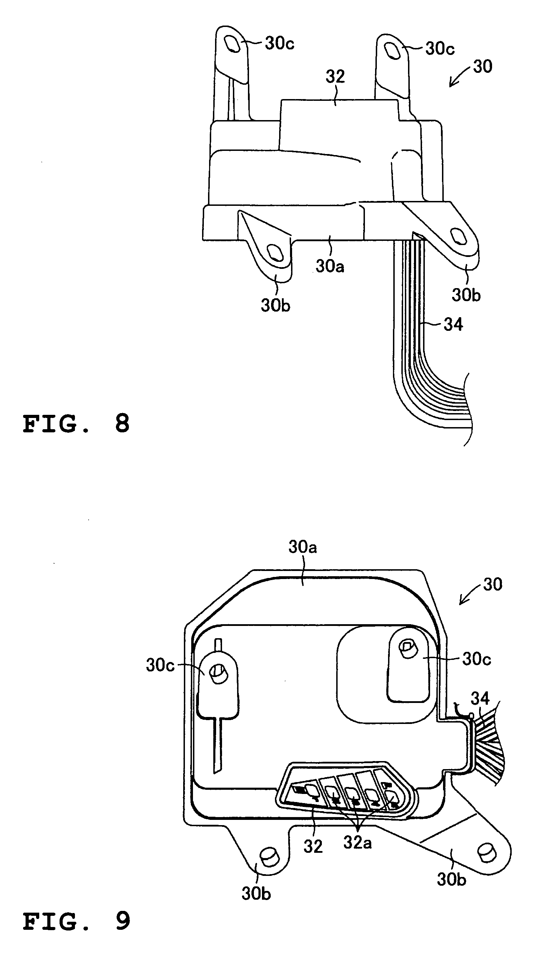

The controller 30 is a device that electrically controls a drive system of the electric bicycle 10, and is configured as shown in FIGs. 8 and 9. That is, the controller 30 has a pair of fastening pieces 30b, 30b disposed at bottom portions of one side of a controller body 30a, each having a screw hole, and has a pair of fastening pieces 30c, 30c disposed at top portions of another side of the body 30a. The indicator 32 is positioned at a top portion of the one side of the body 30a. The controller body 30a has a container that incorporates electronic parts which form the controller 30 and the indicator 32 in the interior thereof.

A plurality of LEDs 32a are attached to a surface of the indicator 32 to indicate a charge condition of the battery 33. The LEDs 32a are arranged so that some of them illuminate in accordance with the charge condition of the battery 33. If the battery 33 is sufficiently charged when the controller 30 is under the active condition, all the LEDs 32a illuminate. With the charge amount of the battery 33 decreasing, the LEDs 32a of FIG. 9 go out one after another from the LED 32a positioned at the most right side.

A plurality of lead wires 34 are connected to the controller 30. In those lead wires 34, lead wire 34a is connected to the potentiometer 23c and the brake switches 25a, 25b, and a lead wire 34b is connected to the power switch 31. Also, a lead wire 34c is connected to the battery 33, and a lead wire 34d is connected to the electric motor 35. A portion of the internal surface of the rear surface cover member 13a adjacent to the window 29a has bosses 36 positioned at certain intervals. Screws 37 are inserted into the screw holes of the fastening pieces 30b, 30c and screwed into the bosses 36; thereby, the controller 30 is fixed to the rear surface cover member 13a. In this embodiment, the screws 37 are not exposed out of the rear surface cover member 13a.

The power switch 31 is attached to a peripheral edge around the window 29b under a condition that a key receiving opening 31 a is oriented outside. Upon inserting a key 38 into the key receiving opening 31 a and turning the key 38 in one direction, the controller 30 allows the battery 33 to supply the power to the electric motor 35. Meanwhile, upon turning the key 38 in the opposite direction, the controller 30 forbids the battery 33 to supply the power to the electric motor 35. A rear portion of the down tube 21, whose front end portion is coupled with the head pipe 19, extends obliquely rearward downward from the coupling portion with the head pipe 19 and curves to extend horizontally. A pair of rear frames (not shown) are coupled with a rear end portion of the down tube 21. The rear frames extend obliquely upward rearward in the rear cover unit 15.

The rear frames are spaced apart from each other and respective rear ends thereof are coupled with each other. A battery 33 is placed between the respective rear frames. A rear arm 39 is coupled with the rear end portion of the down tube 21 through a coupling member (not shown). The rear arm 39 has a pair of arm members extending parallel to each other and coupled with each other at respective front end portions. The rear arm 39 extends rearward. Rear end portions of the respective arm members of the rear arm 39 support respective lateral ends of the axle 12a of the rear wheel 12 for rotation. The rear wheel 12 thus is rotatable about an axis of the axle 12a. Rear cushions 39a extend between top ends of rear end portions of the respective arm members of the rear arm 39 and almost center portions of the respective rear frames. The rear end portions of the respective arm members of the rear arm 39 are swingable by telescopic movements of the rear cushions 39a.

A transmission case 12b is disposed in a center portion of the rear wheel 12. An electric motor 35, a reduction gears and a drum brake (not shown) are contained in the transmission case 12b. The electric motor 35 operates under control of the controller 30 in response to an operational amount of the grip 23b to generate the driving force for the rear wheel 12. The electric motor 35 stops its operation under control of the controller 30 when the brake levers 24a, 24b are operated.

A chain 17b is wound around a sprocket of the pedal section 17 and a sprocket of the rear wheel 12. When the rider rotates pedals 17a, the driving force of human power is transmitted from the pedal section 17 to the rear wheel 12 through the chain 17b. The front wheel 11, as well as the rear wheel 12, has a brake (not shown). This brake and the drum brake of the rear wheel 12 can brake the associated front wheel 11 and rear wheel 12 in response to respective operational amounts of the brake levers 24a, 24b.

A bottom of a front end of the seat 16 disposed above the rear cover unit 15 is pivotable with a hinge coupling 16a. In the interior of the rear cover unit 15, two spaces are defined, one space for placing the battery 33 and another space for placing a helmet or the like. Because of this construction, when the seat 16 is pivoted upward about an axis of the hinge coupling 16a, the rear cover unit 15 opens upward. The rider can put in or out the battery 33, the helmet, etc. or can charge the battery 33 through the opening of the cover unit 15. The electric bicycle 10 also has a pivotable stand (not shown) to keep the electric bicycle 10 stand in its standstill state. In addition, the rear end portion of the down tube 21 and the pedal section 17 are covered with a cover member.

When the rider uses the electric bicycle 10, the rider sits on the seat 16, inserts the key 38 into the key receiving opening 31 a of the power switch 31 and turns it in the foregoing one direction. Thereby, the controller 30 is activated. Because the indicator 32 illuminates in this state, the rider can check the charge condition of the battery 33 by looking at the indicator 32. Then, the rider puts his or her feet on the respective pedals 17a. If the rider wants to run the electric bicycle 10 simply as a bicycle on a horizontal road or on a down slope, the rider rotates the pedals 17a to transmit the driving force to the rear wheel 12.

When the rider wants to decrease a running speed of the electric bicycle 10, the rider operates the brake levers 24a, 24b to generate necessary braking force. Thereby, the electric bicycle 10 decreases its speed in response to the respective operational amounts of the brake levers 24a, 24b. If the rider wants to run the electric bicycle 10 while making the electric motor 35 generate the driving force thereof on an upslope or the like, the rider operates the grip 23b in accordance with a speed that the rider desires. Under this condition, if the rider just keeps the feet on the pedals 17a and does not rotate them, a one-way clutch disposed on the rear wheel 12 side prevents the rotation of the electric motor 35 from being transmitted to the pedals 17a through the chain 17b. On the other hand, the rider can keep rotating the pedals 17a with his or her own feet.

According to this operation, small force generated by the rider can run the electric bicycle 10 in a relatively high speed range.

When the rider wants to decrease the running speed of the electric bicycle 10 under the condition that the electric motor 30 rotates the rear wheel 12, the rider operates the brake levers 24a, 24b so that the controller 30 controls the electric motor 35 to stop. After the electric motor 35 stops, the rider can continuously operate the brake levers 24a, 24b to further decrease the speed in response to the respective operational amounts of the brake levers 24a, 24b. When the rider wants to stop the run of the electric bicycle 10, the rider turns the key 38 in the opposite direction to deactivate the controller 30. Then, the rider pivots the stand downward toward the ground; thereby, the electric bicycle 10 can keep standing on the ground.

On this occasion, if the indicator 32 indicates that the charge amount of the battery 33 decreases, the rider can connect a charge cable (not shown) to the battery 33 to charge up the battery 33. Specifically, the rider pivots the seat 16 so that the rear cover unit 15 opens upward, and then the rider connects the battery 33 to the power source using the charge cable. During charging, the seat 16 is lowered to close the interior spaces of the rear cover unit 15. Under the condition, the charge cable extends outside through a gap between the rear cover unit 15 and the seat 16.

As thus described, according to the electric bicycle 10 of the embodiment, the indicator 32 is attached to the controller 30 and is placed in the interior of the front cover unit 13. Thus, even the single container can contain both the indicator 32 and the controller 30 to protect them from water and dust. Consequently, such a simple structure can protect the indicator 32 and the controller 30, and the production costs can decrease. Because the wiring circuit connecting the indicator 32 and the controller 30 to each other can be short, the production costs can further decrease. In addition, because the indicator 32 and the controller 30 are fastened to the front cover unit 13, specific members to which the indicator 32 and the controller 30 are fastened are not necessary. The fastening structure for the indicator 32 and the controller 30 thus can be simpler.

The rear surface cover member 13a, which forms the rear portion of the front cover unit 13, has the window 29a, and the controller 30 is disposed in the internal space 27 of the front cover unit 13 with the indicator 32 exposed outside through the window 29a. Thereby, the rider can easily watch the indicator 32 while sitting on the seat 16, and the controller 30 can be effectively protected from water and dust. In addition, the controller 30 is fastened to the bosses 36 formed in the internal surface of the rear surface cover member 13a by the screws 37. Accordingly, the screws 37 are not exposed outside, and the front cover unit 13 does not lose its good appearance.

Because the front surface cover member 13b is detachably attached to the rear surface cover member 13a by the screws 26, the controller 30 attached to the rear surface cover member 13a can be exposed outside by detaching the front surface cover member 13b from the rear surface cover member 13a. Accordingly, the maintenance, inspection or repair service of the controller 30 can be easily made. Also, because the window 29a, through which the indicator 32 is exposed outside, is formed in the surface of the recessed portion 28a, the indicator 32 does not protrude out of the rear surface cover member 13a, and the rear surface cover member 13a does not lose its good appearance.

The rear surface cover member 13a has the recessed portion 28a and the recessed portion 28b both transversely placed side by side so as to oppose each other. The recessed portion 28b has a window 29b facing upward, and the power switch 31 is placed in the window 29b. According to the arrangement, the power switch 31 does not protrude out of the rear surface cover member 13a. The rear surface cover member 13a does not lose its good appearance. Also, the power switch 31 and the controller 30 having the indicator 32 can be compactly arranged. Because the power switch 31 is disposed in the recessed portion 28b, the knee or knees of the rider do not touch the power switch 31, and sufficient room for the rider can be secured. In addition, because the power switch 31 is positioned on the surface of the recessed portion 28b facing upward, the rider can easily operate the power switch 31.

The handlebars 14 have the grip 23b and the potentiometer 23c, and the potentiometer 23c and the controller 30, which is placed in the interior of the front cover unit 13, are connected to each other by the lead wire 34a. Thereby, the lead wire 34a can be short and can be easily installed. Also, the handlebars 14 have the brake levers 24a, 24b and the brake switches 25a, 25b for detecting that the brake levers 24a, 24b are operated. The brake switches 25a, 25b and the controller 30 are connected to each other by the lead wire 34a. The lead wire 34a can be short and can be easily installed.

The electric bicycle according to the teaching of the present embodiment is not limited to the embodiment described above and can be properly modified. For example, in the embodiment discussed above, the charge condition of the battery 33 is indicated by the LEDs 32a of the indicator 32. However, the indicator 32 can indicate various conditions including a vehicle speed and the on-off state of the light 14a other than the charge condition of the battery 33. Also, lamps or the like can replace the LEDs 32a. Further, seal members can be inserted into the boundary portion between the peripheral edge of the window 29a and the indicator 32 or the boundary portion between the peripheral edge the window 29b and the power switch 31 to seal up the boundary portions.

In the embodiment described above, the indicator 32 is exposed outside through the rear surface cover member 13a. However, the indicator 32 can be exposed outside through the front surface cover member 13b. The fasteners that fasten the controller 30 to the front cover unit 13 are not limited to the screws 37. Any other fasteners can be used if they are usable for fastening the controller 30 to the front cover unit 13. In addition, other portions of the electric bicycle can be properly modified or varied within the technical scope of the teaching of the present embodiment.

In order to achieve the object, the present embodiment has the following aspects. In accordance with a first aspect of the present embodiment, an electric bicycle includes: a pedal section for inputting driving force; an electric motor for generating driving force; a controller for controlling rotational torque of the electric motor; and an indicator, in which the body of the electric bicycle has a steering shaft pivotable about an axis thereof, the steering shaft has a handle unit atop thereof, the body also has a front cover unit adjacent to the steering shaft, the indicator is attached to the controller, and the controller is attached to the front cover unit together with the indicator.

Because the indicator is attached to the controller in the electric bicycle as thus constructed, a single container can contains respective electronic parts of the indicator and the controller to protect them from water and dust. Consequently, the structure for protecting the indicator and the controller can be simpler and production costs thereof can fall. Because wiring circuits connecting the indicator and the controller to each other can be shortened, the connecting structure can be simpler and production costs thereof can further fall. Because all the bicycle needs is a single structure for fixing the indicator and the controller to the body, the structure can be simpler. In addition, the indicator of the aspect of the present invention can indicate various pieces of information. For example, the indicator can indicate a vehicle speed and a charge condition of a battery that supplies electric power to the electric motor for rotation. Also, if the electric bicycle has at least one light, the indicator can indicate a lighting condition of the light.

In accordance with a second aspect of the present embodiment, the front cover unit is formed with a front surface cover member and a rear surface cover member, the front and rear surface cover members are coupled with each other and together define an internal space therebetween, a window is formed at a portion of the front cover unit so that the space opens outward, and the controller is positioned within the space while the indicator is exposed through the window.

Because the indicator and the controller of the electric bicycle are attached using the front cover unit which is normally disposed on such an electric bicycle as a decorative member, no additional attaching member is necessary for attaching the indicator and the controller or for protecting them. In addition, because the window is formed at the portion of the front cover unit so that the space opens outward, and the controller is positioned within the space while the indicator is exposed through the window, portions other than the indicator, which needs to be seen, can be covered with the front cover unit. As a result, the controller can be effectively protected from water and dust. In this construction, preferably, a seal member is interposed into the boundary portion between the indicator and a peripheral edge of the front cover unit forming the window. The window, through which the indicator is exposed outside, can be positioned in its rear surface or in its front surface.

In accordance with a third aspect of the present embodiment, the controller is fastened to the rear surface cover member by a fastener disposed within the space. Thereby, the front cover unit does not lose its good appearance because the fastener is not exposed outside. In addition, because the rear surface cover member is a member that has a wide surface extending transversely, a seat for fastening the controller can be easily provided. The fastener is only required to have a fastening function by which the controller is fastened to the rear surface cover, and any fasteners can be used if they satisfy this condition. For example, a screw can be used as one of the fasteners.

In accordance with a fourth aspect of the present embodiment, the front surface cover member is detachably attached to the rear surface cover member. Thus, when the front surface cover member is detached from the rear surface cover member, the controller attached to the rear surface cover member and concealed thereby can be entirely exposed. Accordingly, the maintenance, inspection or repair service of the controller can be easily made.

In accordance with a fifth aspect of the present embodiment, the rear surface cover member has a recessed portion having a surface that faces upward, and the window is formed on the surface of the recessed portion facing upward. Thereby, because the window, through which the indicator is exposed outside, is formed on the surface of the recessed portion, the indicator does not protrude out of the rear surface cover member, and the rear surface cover member does not lose its good appearance, accordingly. In addition, because the indicator is attached to the rear surface cover member, which forms the rear surface of the front cover unit, with the indicator facing upward, the rider who drives the electric bicycle can easily watch the indicator.

In accordance with a sixth aspect of the present embodiment, the recessed portion is positioned on a right or left side of the rear surface cover member relative to the steering shaft, another recessed portion having another surface that faces upward is positioned on the remainder side of the rear surface cover member, another window is formed on the surface of the another recessed portion facing upward, and a power switch for starting or stopping the electric motor is exposed through the another window.

Thereby, because the another window through which the power switch is exposed outside is formed on the surface of the another recessed portion, the power switch does not protrude out of the rear surface cover member. The rear surface cover member does not lose its good appearance, accordingly. Because the power switch and the controller having the indicator are allotted on respective sides of the rear surface cover member interposing the steering shaft, the power switch and the controller can be compactly arranged. Because the power switch is disposed in the recessed portion, the knee or knees of the rider do not touch the power switch, and sufficient room for the rider can be secured. In addition, because the power switch is positioned on the surface of the recessed portion facing upward, the rider can easily operate the power switch.

In accordance with a seventh aspect of the present embodiment, the handle unit has an accelerator and accelerator operational amount detecting means for detecting an operational amount of the accelerator, and the accelerator operational amount detecting means and the controller are connected to each other by a lead wire through which a detection signal detected by the accelerator operational amount detecting means is transmitted to the controller. Thereby, because the distance between the accelerator operational amount detecting means and the controller is short, the lead wire can be shortened and can be easily installed.

In accordance with an eight aspect of the present embodiment, the handle unit has a brake operator and brake operation detecting means for detecting an operation of the brake operator, and the brake operation detecting means and the controller are connected to each other by a lead wire through which a detection signal detected by the brake operation detecting means is transmitted to the controller. Thereby, because the distance between the brake operation detecting means and the controller is short, the lead wire can be shortened and can be easily installed. In this construction, when the brake operation detecting means detect that the brake operator is operated, the controller controls the battery to stop supplying the power to the electric motor so that the electric motor does not generate the rotational torque.

The description above discloses, as a particularly preferred embodiment in order to provide an electric bicycle whose controller has an indicator so that a parts count is reduced and a structure of the bicycle is simpler to reduce production costs, a controller 30 having an indicator 32 is disposed in an electric bicycle 10 including a pedal section 17 and an electric motor 35. The controller 30 is attached to a portion of a front cover unit 13 and is positioned in the interior thereof with the indicator 32 exposed outside. The front cover unit 13 is attached to the body of the electric vehicle 10 around a steering shaft 22 coupled with handlebars 14. The front cover unit 13 is formed with a front surface cover member 13b and a rear surface cover member 13a both detachably coupled with each other by screws 37 to define an internal space 27 therebetween. The rear surface cover member 13a has a recessed portion 28a having a window 29a facing upward. The indicator 32 is exposed outside through the window 29a. The rear surface cover member 13a also has another recessed portion 28b having a window 29b facing upward. A power switch 31 is exposed outside through the window 29b.

The description above discloses, as a first aspect, an electric bicycle comprising: a pedal section for inputting driving force; an electric motor for generating driving force; a controller for controlling rotational torque of the electric motor; and an indicator, wherein the body of the electric bicycle has a steering shaft pivotable about an axis thereof, the steering shaft has a handle unit atop thereof, the body also has a front cover unit adjacent to the steering shaft, the indicator is attached to the controller, and the controller is attached to the front cover unit together with the indicator.

As a second aspect, in the electric bicycle according to the first aspect, the front cover unit is formed with a front surface cover member and a rear surface cover member, the front and rear surface cover members are coupled with each other and together define an internal space therebetween, a window is formed at a portion of the front cover unit so that the space opens outward, and the controller is positioned within the space while the indicator is exposed through the window.

As a third aspect, in the electric bicycle according to the second aspect, the controller is fastened to the rear surface cover member by a fastener disposed within the space.

As a fourth aspect, in the electric bicycle according to the second or third aspect, the front surface cover member is detachably attached to the rear surface cover member.

As a fifth aspect, in the electric bicycle according to any one of the second to fourth aspects, the rear surface cover member has a recessed portion having a surface that faces upward, and the window is formed on the surface of the recessed portion facing upward.

As a sixth aspect, in the electric bicycle according to the fifth aspect, the recessed portion is positioned on a right or left side of the rear surface cover member relative to the steering shaft, another recessed portion having another surface that faces upward is positioned on the remainder side of the rear surface cover member, another window is formed on the surface of the another recessed portion facing upward, and a power switch for starting or stopping the electric motor is exposed through the another window.

As a seventh aspect, in the electric bicycle according to any one of the first to sixth aspects, the handle unit has an accelerator and accelerator operational amount detecting means for detecting an operational amount of the accelerator, and the accelerator operational amount detecting means and the controller are connected to each other by a lead wire through which a detection signal detected by the accelerator operational amount detecting means is transmitted to the controller.

As an eight aspect, in the electric bicycle according to any one of the first to seventh aspects, the handle unit has a brake operator and brake operation detecting means for detecting an operation of the brake operator, and the brake operation detecting means and the controller are connected to each other by a lead wire through which a detection signal detected by the brake operation detecting means is transmitted to the controller.

## Claims

1. Electric bicycle comprising a pedal section (17) for inputting driving force, an electric motor (35) for generating driving force, a controller (30) for controlling rotational torque of the electric motor (35), and an indicator (32), wherein the indicator (32) is attached to the controller (30) and is placed in an interior of a front cover unit (13).

2. Electric bicycle according to claim 1, wherein a body of the electric bicycle has a steering shaft pivotable about an axis thereof, said steering shaft having a handle unit atop thereof, and wherein the front cover unit (13) is arranged adjacent to the steering shaft, and wherein the controller with the attached indicator is attached to the front cover unit (13).

3. Electric bicycle according to claim 1 or 2, wherein the front cover unit (13) is formed with a front surface cover member and a rear surface cover member, and wherein the front and rear surface cover members are coupled with each other and together define an internal space therebetween, and wherein a window is formed at a portion of the front cover unit so that the space opens outward, and the controller is positioned within the space while the indicator is exposed through the window.

4. Electric bicycle according to claim 3, wherein the controller is fastened to the rear surface cover member by a fastener disposed within the internal space.

5. Electric bicycle according to claim 3 or 4, wherein the front surface cover member is detachably attached to the rear surface cover member.

6. Electric bicycle according to one of the claims 3 to 5, wherein the rear surface cover member has a recessed portion having a surface that faces upward, and the window is formed on the surface of the recessed portion facing upward.

7. Electric bicycle according to claim 6, wherein the recessed portion is positioned on a right or left side of the rear surface cover member relative to the steering shaft, and wherein another recessed portion having another surface that faces upward is positioned on the remainder side of the rear surface cover member, and wherein another window is formed on the surface of the another recessed portion facing upward, and wherein a power switch for starting or stopping the electric motor is exposed through the another window.

8. Electric bicycle according to one of the claims 2 to 7, wherein the handle unit has an accelerator and accelerator operational amount detecting means for detecting an operational amount of the accelerator, and wherein the accelerator operational amount detecting means and the controller are connected to each other by a lead wire through which a detection signal detected by the accelerator operational amount detecting means is transmitted to the controller.

9. Electric bicycle according to one of the claims 2 to 8, wherein the handle unit has a brake operator and brake operation detecting means for detecting an operation of the brake operator, and wherein the brake operation detecting means and the controller are connected to each other by a lead wire through which a detection signal detected by the brake operation detecting means is transmitted to the controller.
